# EUROPEAN PATENT APPLICATION

(11) **EP 2 899 770 A1**
(43) Date of publication of application: **29.07.2015**
(21) Application number: 15152238.0
(22) Date of filing: 23.01.2015
(51) Int. Cl.: H01M 2/06, H01M 2/30, H01M 2/22, H01M 2/26, H01M 2/04, H01M 2/20

(54) **Terminal assembly for a secondary battery**

(30) Priority: 28.01.2014 KR 20140010877
(71) Applicant: Samsung SDI Co., Ltd., Yongin-si, Gyeonggi-do (KR)
(72) Inventor: Jang, Myung-Jae, Yongin-si, Gyeonggi-do Yongin-si, Gyeonggi-do (KR); Song, Jang-Hyun, Yongin-si, Gyeonggi-do (KR)
(74) Representative: Ludwig, Ingo

(57) **Abstract**

The invention is directed to a secondary battery (10) comprising at least one battery cell (100) with an electrode assembly (150), a case (180) accommodating the electrode assembly (150), and a cap plate (130) affixed to the case (180), the cap plate (130) comprising an opening (130'), wherein the battery (10) further comprises an electrode unit (110), which extends through the opening (130') and which comprises a current collecting member (112) that electrically contacts an electrode of the electrode assembly (150), and an electrode terminal (111) that is arranged at an outer side of the cap plate (130), and wherein the current collecting member (112) and the electrode terminal (111) are formed of different materials and are interconnected by a joining portion (113) of the electrode unit (110). In order improve the mechanical strength and the corrosion resistance of the joining portion (113), the invention provides that the battery (10) comprises a seal molding (115) in which the joining portion (113) is embedded.

## Description

### BACKGROUND

### 1. Field

The invention relates to a secondary battery comprising at least one battery cell with an electrode assembly, a case accommodating the electrode assembly, and a cap plate affixed to the case, the cap plate comprising an opening, wherein the battery further comprises an electrode unit, which extends through the opening and which comprises a current collecting member that electrically contacts an electrode of the electrode assembly, and an electrode terminal that is arranged at an outer side of the cap plate, and wherein the current collecting member and the electrode terminal are formed of different materials and are interconnected by a joining portion of the electrode unit..

### 2. Description of the Related Art

Unlike a primary battery which is not rechargeable, a secondary battery is generally rechargeable and dischargeable. The secondary battery is used as an energy source of a mobile device, an electric vehicle, a hybrid vehicle, an electric bicycle, an uninterruptible power supply, etc., and according to the type of an external device using the secondary battery, the secondary battery may be used in the form of a single battery or in the form of a battery module obtained by connecting a plurality of secondary batteries in one unit.

A small mobile device, such as a cellular phone, may operate for a predetermined time period by using the output and capacity of a single battery. However, when long-time driving or high-power driving is necessary as in an electric vehicle or a hybrid vehicle, a battery module is preferred due to its output and capacity, and the output voltage or the output current of the battery module may be increased according to the number of batteries included in the battery module.

Information disclosed in this Background section was already known to the inventors of the present invention before achieving the present invention or is technical information acquired in the process of achieving the present invention. Therefore, it may contain information that does not form the prior art that is already known in this country to a person of ordinary skill in the art.

When producing the secondary battery, components of different metals need to be interconnected e.g. by welding. However, interconnecting and in particular welding different material with each other is often difficult due to properties of the different materials. Furthermore, due to the material properties, connections between different materials are prone to corrosion.

Hence, the object of the invention is to provide a secondary battery that can be easily produced and that has a long life time.

### SUMMARY

The object is solved for the secondary battery mentioned above in that the battery comprises a seal molding in which the joining portion is embedded.

By embedding the joining portion in the seal molding, the joining portion is effectively protected from materials that may cause accelerated corrosion of the joining portion. Yet, the seal molding does not cause additional efforts when forming the joining portion. Moreover, the seal molding reinforces and strengthens the mechanical stability of the joining portion.

The solutions according to the invention can be combined as desired and further improved by the further following embodiments that are advantageous on their own, in each case and if not stated to the contrary.

According to a first possible embodiment, the seal molding preferably completely surrounds the joining portion, thereby protecting the joining portion from all sides from corrosion accelerating factors. In particular, the seal molding may completely surround a section of the electrode unit, in which the current collecting member and the electrode terminal overlap each other and form the joining portion. Thus, the joining portion is protected at all lateral sides from corrosion accelerating materials.

The seal molding may insulate the electrode unit from the cap plate. Hence, an additional insulator is not necessary, which facilitates structure and producability as well as energy density of the rechargeable battery.

In order to avoid that a separate seal needs to be added to the battery for sealing the opening, the seal molding may seal the opening. Again, structure and producability are facilitates and energy density is improved.

The seal molding can extend from an inside of the case through the opening to an outer side of the case. Therefore, materials inside and outside of the case are prevented from readily reaching the joining portion.

To improve the mechanical connection between the cap plate and the seal molding and the sealing effect of the seal molding, the seal molding may be formed with a groove portion and block portions, wherein the groove portion is arranged between the block portions, and wherein the cap plate engages the groove portion. The block portions prevent unintended movements of the seal molding with respect to the cap plate and may even overlap the cap plate, such that a path along which fluid like water may flow into or out of the battery is elongated with respect the a path that merely extends along the opening.

The current collecting member can extend from or along the electrode terminal in a longitudinal direction, e.g. of the current collecting member, and the groove portion may completely circulate the joining portion in a circumferential direction of the current collecting member, the circumferential direction extending perpendicular to and around the longitudinal direction. Hence, the cap plate can be placed in the groove portion to provide a stable connection between the seal molding and the cap plate.

The joining portion can be formed by sheet metal joining, riveting, caulking, welding and/or punching the current collecting member and the electrode terminal. All these joining portions can be effectively protected from corrosion accelerating materials by the seal molding. In case a blind or a through hole is formed in the current collecting member and/or the electrode terminal e.g. by punching, the seal molding can extend or reach into the hole to provide a form fit between the electrode unit and the seal molding and even between the current collecting member and the electrode terminal.

The battery may comprise a second electrode unit that extends through a second opening of the cap plate and that comprises a current collecting member and an electrode terminal. The current collecting member and the electrode terminal are preferably integrally formed with each other. Hence, current collecting member and the electrode terminal may be formed to be handled as a single piece and may even be formed of one piece. Such a second electrode unit can easily be produced.

The battery can comprise a second seal molding that completely surrounds the second electrode unit and for instance its current collecting member in its circumferential direction, thereby protecting the joining portion from all sides from corrosion accelerating factors. In case the second electrode unit is formed of one material, the second seal molding may mechanically strengthen and/or stabilize the position of the second electrode unit with respect to the cap plate.

In order to avoid that a separate seal needs to be added to the battery for sealing the opening, the second seal molding preferably seals the second opening. Again, structure and producability are facilitates and energy density is improved.

The second seal molding can be formed with a groove portion and block portions, wherein the groove portion is arranged between the block portions, and wherein the cap plate engages the groove portion. Due to this shape, the mechanical connection between the cap plate and the seal molding and the sealing effect of the seal molding are improved. The block portions prevent unintended movements of the seal molding with respect to the cap plate and may even overlap the cap plate, such that a path along which fluid like water may flow into or out of the battery is elongated with respect the a path that merely extends along the opening.

The current collecting member may extend from the electrode terminal in a longitudinal direction and the groove portion completely circulates the current collecting member in its circumferential direction. The same advantages as describe above arise from this similar embodiment.

To further improve producability, the electrode terminal of the electrode unit and the second electrode unit are preferably formed of the same material.

The battery can comprises two battery cells that are electrically interconnected by a bus bar, wherein the electrode terminals of the electrode units of the battery cells and the bus bar are preferably made of the same material. Thus the bus bar can easily be connected and in particular welded with the electrode terminals.

Thus, according to the present invention, a secondary battery, in which a terminal unit including a joining portion between different kinds of metals is provided, has improved corrosion resistance and joint strength.

Furthermore, the bus bar may be provided that electrically connects neighboring battery cells and that results in an improved connection structure, and thus, the problem of deterioration of weldability due to material characteristics is fundamentally solved.

The cap plate may seal the case. The seal molding may be interposed between the electrode unit and the cap plate. The current collecting member is preferably disposed adjacent to the electrode assembly, and the electrode terminal preferably extends from the current collecting member to above the cap plate. The current collecting member and the electrode terminal are formed of different kinds of metals, for instance in order to provide for a stable mechanical and electrical connection between an electrode of the electrode assembly and the current collecting member, and the seal molding surrounds the joining portion between the current collecting member and the electrode terminal.

For example, the joining portion may include a dissimilar metal interface between the current collecting member and the electrode terminal. The joining portion may be formed by any one of sheet metal joining (Tox), riveting, and caulking. For instance, the current collecting member may be formed of a copper material, and the electrode terminal may be formed of an aluminum material.

The joint groove portion may constitute a neck portion having a smallest width in the seal molding.

In particular the upper block may insulate the electrode terminal from the cap plate.

For example, the joining portion between the electrode terminal and the current collecting member may be surrounded by at least the joint groove portion and the lower block.

Preferably, the seal molding is seamlessly formed.

For example, the seal molding is formed by insert injection molding for injecting molding resin into a mold in which the electrode unit assembled is temporarily fixed and in order to penetrate the cap plate.

The electrode unit may be a first electrode unit, the current collecting member, the electrode terminal, and the seal molding may be a first current collecting member, a first electrode terminal, and a first seal molding, respectively, and the secondary battery may further include the second electrode unit, which has a different polarity than the first electrode unit.

The second electrode unit may include the second current collecting member and the second electrode terminal formed of the same kind of metals, e.g. in one body, hence integrally formed with each other.

For example, the second current collecting member and the second electrode terminal may be formed of an aluminum material and for instance an alloy.

The second electrode unit may be formed to penetrate the cap plate, and the secondary battery may further include the second seal molding which is interposed between the second electrode unit and the cap plate.

The at least one battery cell may include first and second battery cells disposed to neighbor each other, electrode terminals of the first and second battery cells may be electrically connected via the bus bar, and the electrode terminals of the first and second battery cells and the bus bar are preferably formed of a first metal material.

For example, the bus bar may electrically connect the electrode terminals of the first and second battery cells having different polarities.

Each of the first and second battery cells may include an electrode assembly, a cap plate which seals a case accommodating the electrode assembly, an electrode unit which is formed to penetrate the cap plate and electrically connected to the electrode assembly, and a seal molding which is interposed between the electrode unit and the cap plate. The electrode unit may include a current collecting member which is disposed adjacent to the electrode assembly, and an electrode terminal which extends from the current collecting member to above the cap plate. The current collecting member and the electrode terminal may be formed of different kinds of metals, and the seal molding may surround a joining portion between the current collecting member and the electrode terminal.

### BRIEF DESCRIPTION OF THE DRAWINGS

The invention is described hereinafter in greater detail and in an exemplary manner using advantageous embodiments and with reference to the drawings. The described embodiments are only possible configurations, in which, however, the individual features as described above can be provided or combined independently of one another or can be omitted in the drawings, unless stated otherwise:
FIG. 1 is a perspective view of a secondary battery according to an embodiment of the present invention;
FIG. 2 is a perspective view of a battery cell shown in FIG. 1;
FIG. 3 is an exploded perspective view of the battery cell shown in FIG. 2;
FIG. 4 is a perspective view of main components of FIG. 3;
FIG. 5 is a cross-sectional view taken along line V-V of FIG. 4;
FIGS. 6 to 8 are cross-sectional views showing various forms of a joining portion between an electrode terminal and a current collecting member;
FIG. 9 is a cross-sectional view taken along line IX-IX of FIG. 4; and
FIG. 10 is a perspective view of a secondary battery compared with the present invention.

### DETAILED DESCRIPTION

Reference will now be made in detail to embodiments, examples of which are illustrated in the accompanying drawings, wherein like reference numerals refer to like elements throughout. Accordingly, the embodiments are merely described below, by referring to the figures, to explain aspects of the present description.

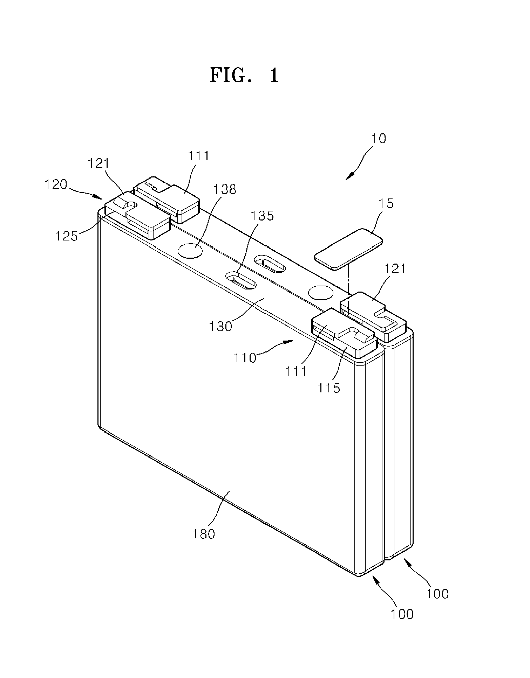

FIG. 1 shows a secondary battery 10 according to an embodiment of the present invention. The secondary battery 10 may include at least one battery cell 100. In the embodiment shown in FIG. 1, the secondary battery 10 may include first and second battery cells 100 that are electrically connected to each other. The first and second battery cells 100 disposed to neighbor each other in an arrangement direction may be electrically connected to each other through a bus bar 15.

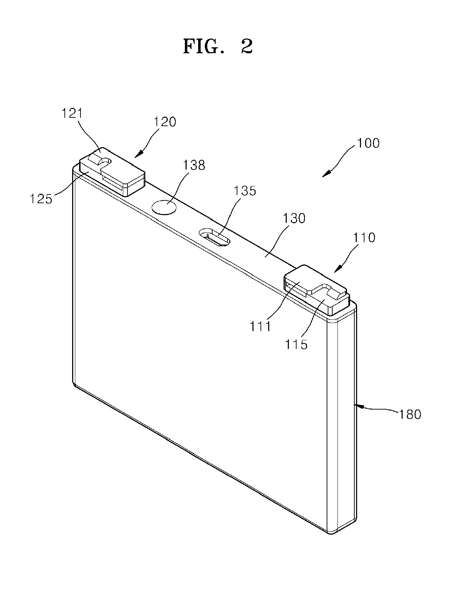

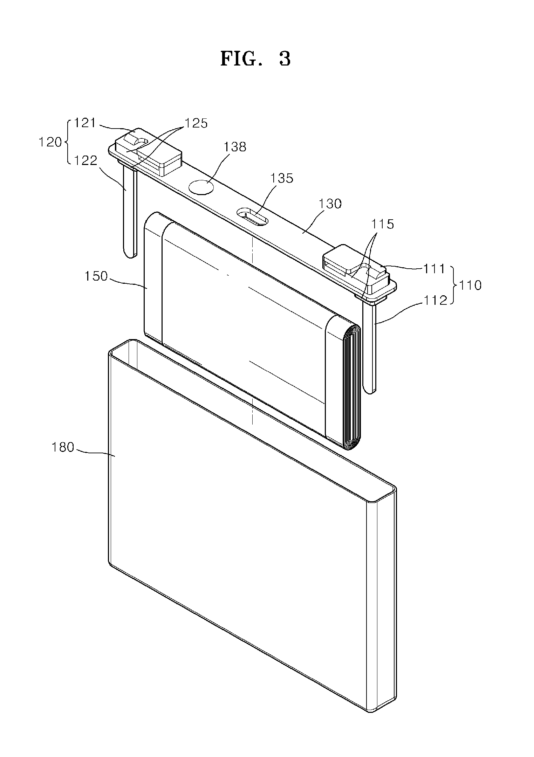

FIG. 2 shows a battery cell 100 shown in FIG. 1. Referring to the drawing, the battery cell 100 may include a case 180 that contains an electrode assembly 150 (see FIG. 3), a cap plate 130 that seals the case 180, and electrode terminals 111 and 121 that are disposed on the cap plate 130. The electrode terminals 111 and 121 may include a pair of first and second electrode terminals 111 and 121 having different polarities.

In the cap plate 130, a vent portion 135 for, upon an abnormal operation in which the internal pressure of the case 180 exceeds a previously set point, releasing the internal pressure by rupturing, and an electrolyte injection hole sealing 138 for sealing an electrolyte injection hole may be formed.

FIG. 3 shows an exploded perspective view of the battery cell 100 shown in FIG. 2. Referring to the drawing, the electrode assembly 150 may be accommodated in the case 180. The electrode assembly 150 may include first and second electrode plates having opposite polarities and a separator interposed between the first and second electrode plates. The electrode assembly 150 may be formed as a roll type in which the first and second electrodes and the separator are rolled in a jelly-roll shape, or as a stack type in which the first and second electrodes and the separator are alternately stacked.

The cap plate 130 is coupled onto an upper opening, in which the electrode assembly 150 is accommodated, to seal the electrode assembly 150, and the electrode terminals 111 and 121 electrically connected to the electrode assembly 150 may be formed on the outside of cap plate 130 for an electric connection between the electrode assembly 150 and an external circuit (not shown) or between the electrode assembly 150 and the neighboring battery cell 100. The electrode terminals 111 and 121 may include the first electrode terminal 111 and the second electrode terminal 121 having different polarities, and may be electrically connected to the first and second electrode plates of the electrode assembly 150, respectively.

For example, the first and second electrode terminals 111 and 121 are electrically connected to the electrode assembly 150 accommodated in the case 180, and may be electrically connected to the first and second electrode plates of the electrode assembly 150 and function as negative and positive terminals, respectively. For example, the first and second electrode terminals 111 and 121 may be formed on both the left and right sides of the electrode cell 100, respectively.

The first and second electrode terminals 111 and 121 constitute parts of first and second electrode units 110 and 120. For example, the first and second electrode units 110 and 120 may constitute an electric path extending from the electrode assembly 150 so as to supply discharge power accumulated in the electrode assembly 150 to the outside, or may constitute an electric path connected to the electrode assembly 150 so as to receive recharging power from the outside.

The first and second electrode units 110 and 120 may constitute negative and positive electrodes of the battery cell 100. The first and second electrode units 110 and 120 may be formed to have substantially the same structure. The technical specifications of the electrode units 110 and 120 that will be described below may be applied to the first and second electrode units 110 and 120 in common. However, the present invention is not limited to this case, and the following technical specifications may be only applied to one electrode unit 110 or 120 selected from between the first and second electrode units 110 and 120.

The structure of the first electrode unit 110 will be described below first, and then the second electrode unit 120 will be described.

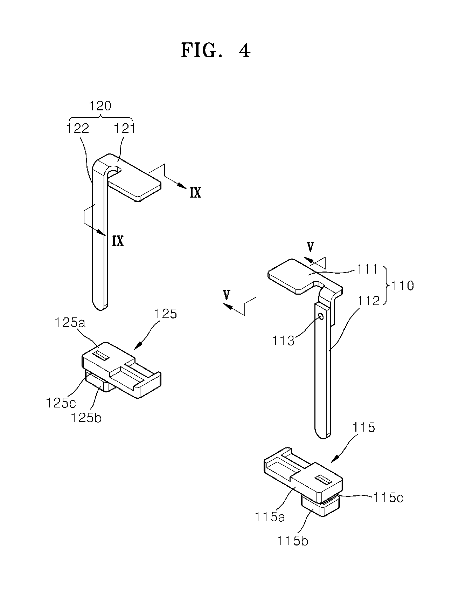

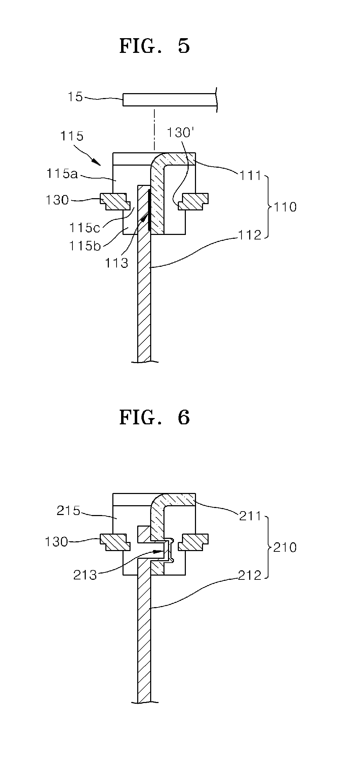

FIG. 4 is an exploded perspective view of main components shown in FIG. 3. FIG. 5 is a cross-sectional view taken along line V-V of FIG. 4. Referring to FIG. 5, the electrode unit 110 is assembled to penetrate an opening 130' of the cap plate 130. Between the electrode unit 110 and the cap plate 130, a seal molding 115 is interposed. The electrode unit 110 includes the electrode terminal 111 (corresponding to the first electrode terminal) disposed on the cap plate 130 and a current collecting member 112 (corresponding to a first current collecting member) that electrically connects the electrode terminal 111 and the electrode assembly 150. For example, the electrode terminal 111 may be formed of a first metal material, and the current collecting member 112 may be formed of a second metal material different from the first metal material. In other words, the electrode terminal 111 and the current collecting member 112 are respectively formed of the first and second metal materials different from each other, and constitute a joint between different kinds of metals at a joining portion 113.

When the electrode terminal 111 is formed of a metal material different from that of the current collecting member 112, a joint between the electrode terminal 111 and the bus bar 15 may be formed of the same kind of metals. For example, when both the electrode terminal 111 and the bus bar 15 are formed of the first metal material, that is, the same material, the joint between the electrode terminal 111 and the bus bar 15 may be formed of the same kind of metals.

However, the current collecting member 112 may be formed of the second metal material different from the first metal material for a stable connection with the electrode assembly 150. As a result, while a joint between different kinds of metals is formed between the current collecting member 112 formed of the second metal material and the electrode terminal 111 formed of the first metal material, a joint between the same kind of metals is formed between the electrode terminal 111 formed of the first metal material and the bus bar 15 formed of the first metal material. As a detailed example, when the first electrode unit 110 constitutes a negative electrode, the current collecting member 112 is formed of a copper material, and the electrode terminal 111 is formed of an aluminum material so that a joint between different kinds of metals (joining portion 113) is formed between the current collecting member 112 and the electrode terminal 111. In this way, a joint between different kinds of metals (joining portion 113) is formed between the current collecting member 112 formed of copper and the electrode terminal 111 formed of aluminum, and as will be described later, the current collecting member 112 and the electrode terminal 111 may be joined to each other by a processing method, such as sheet metal joining (Tox), caulking, or welding.

Meanwhile, both the electrode terminal 111 and the bus bar 15 are formed of an aluminum material, that is, the same material, so that a joint between the same kind of metals may be formed between the electrode terminal 111 and the bus bar 15.

The electrode terminal 111 and the current collecting member 112 are joined to each other at the joining portion 113. At the joining portion 113, the electrode terminal 111 and the current collecting member 112 may be joined to each other by various joining techniques, such as sheet metal joining (Tox), riveting, caulking, or welding.

FIGS. 5 to 8 show various forms of a joining portion between the electrode terminal 111 and the current collecting member 112.

Referring to FIG. 5, the electrode terminal 111 and the current collecting member 112 may be joined to each other by welding. For example, two members to be joined, that is, the electrode terminal 111 and the current collecting member 112, are disposed to overlap each other, and a welding process is applied to an overlapping portion thereof so that the electrode terminal 111 and the current collecting member 112 are joined together. In the welding process, various welding methods, such as ultrasonic welding, laser welding, and resistance welding, may be employed.

Referring to FIG. 6, a joining portion 213 may be formed by sheet metal joining (Tox). In other words, an electrode terminal 211 and a current collecting member 212 may be joined to each other by sheet metal joining (Tox). For example, after the two members to be joined, that is, the electrode terminal 211 and the current collecting member 212, are disposed to overlap each other, a shaping tool (not shown), such as a press punch, may be positioned on any one side of an overlapping portion thereof, a die (not shown) having a concave groove may be positioned on another side, and then the shaping tool may be pressed by a predetermined pressure. Then, the members 211 and 212 overlapping each other are inserted in the concave groove of the die and stick to each other, thereby constituting a joint. Meanwhile, a reference numeral 215 indicates a seal molding, and technical specifications thereof will be described in detail later. Also, a reference numeral 210 indicates a first electrode unit.

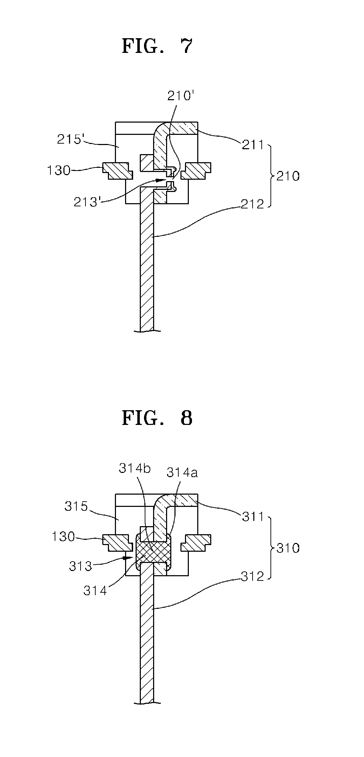

FIG. 7 shows a modified embodiment of the joining portion 213 shown in FIG. 6. Referring to the drawing, a joining portion 213' of this embodiment may be formed by sheet metal joining (Tox) as that of FIG. 6. However, in this embodiment, the two members to be joined, that is, the electrode terminal 211 and the current collecting member 212, are disposed to overlap each other, and holes 210' are formed at an overlapping portion thereof. Then, insert injection molding is performed so that a seal molding 215' may be filled with molding resin injected through the aligned holes 210' of the electrode terminal 211 and the current collecting member 212. Thus, the molding resin injected through the holes 210' of the electrode terminal 211 and the current collecting member 212 increases joining strength. The hole forming and sheet metal joining may be simultaneously performed by applying a predetermined pressure to the electrode terminal 211 and the current collecting member 212 interposed between the shaping tool (not shown) and the die (not shown), or may be performed through separate processes.

Referring to FIG. 8, an electrode terminal 311 and a current collecting member 312 may be joined to each other (joining portion 313) through a riveting or caulking process. In other words, the electrode terminal 311 and the current collecting member 312 may be joined to each other (joining portion 313) by riveting or caulking.

As shown in the drawing, the two members to be joined, that is, the electrode terminal 311 and the current collecting member 312, are disposed to overlap each other and then aligned so that joint holes respectively formed in the electrode terminal 311 and the current collecting member 312 correspond to each other. Subsequently, a rivet member 314 is inserted into the joint holes of the electrode terminal 311 and the current collecting member 312. A shaping tool (not shown), such as a hammer, is positioned on one end side of the rivet member 314, and a die (not shown) is positioned on the other end side of the rivet member 314. Then, end portions of the rivet member 314 are pressed around the joint holes by hammering the rivet with the shaping tool so that the two members 311 and 312 are pressed and joined together.

For example, the rivet member 314 has head portions 314a having a large diameter and a body portion 314b having a small diameter. By hammering ends of the body portion 314b, a predetermined pressure is applied to the ends of the body portion 314b so that the head portions 314a having a larger diameter than the joint holes is formed at the ends of the body portion 314b. In this way, the members 311 and 312 stick together between the two head portions 314a and are joined together. Meanwhile, a reference numeral 315 indicates a seal molding, and will be described in detail later. Also, a reference numeral 310 indicates a first electrode unit.

As described above, the electrode terminal 111 and the current collecting member 112 may constitute the joining portion 113 by various joining methods. The technical scope of the present invention is not limited to the above examples, and the joining portion 113 may be formed by various joining methods in addition to the methods of the examples.

The seal molding 115 (corresponding to a first seal molding) is described now with reference to FIGS. 4 and 5. The joining portion 113 between the electrode terminal 111 and the current collecting member 112 may be surrounded by or embedded in the seal molding 115. The seal molding 115 surrounds the joining portion 113 between the electrode terminal 111 and the current collecting member 112, and may further improve a joining strength between different kinds of metals. Since a joining strength between different kinds of metals may be relatively low due to material characteristics, the joining strength of the joining portion 113 may be improved by surrounding the joining portion 113 between the different kinds of metals with the seal molding 115.

The joining portion 113 between the electrode terminal 111 and the current collecting member 112 is surrounded and sealed by the seal molding 115. The seal molding 115 may cover and protect the joining portion 113 including an interface between the different kinds of metals and blocks infiltration of moisture, thereby preventing corrosion at a dissimilar metal interface. More specifically, the seal molding 115 may insulate the joining portion 113 between the electrode terminal 111 and the current collecting member 112 from surroundings, thereby preventing corrosion of the joining portion 113.

Referring to FIG. 5, the electrode unit 110 including the electrode terminal 111 and the current collecting member 112 is installed to penetrate the cap plate 130 through the opening 130' of the cap plate 130. Here, the seal molding 115 is interposed between the electrode terminal 111 and the cap plate 130. More specifically, the seal molding 115 is interposed between the electrode terminal 111 and the cap plate 130 to join them together, and may serve to fix a position of the electrode unit 110 with respect to the cap plate 130.

The seal molding 115 may be interposed between the electrode terminal 111 and the cap plate 130 to electrically insulate them from each other. For example, the electrode terminal 111 and the cap plate 130 may have different polarities, and may be electrically insulated from each other by interposing the seal molding 115 therebetween. For example, the seal molding 115 may be formed of a polymer resin material having an electrically insulating characteristic.

The seal molding 115 may completely seal the opening 130' of the cap plate 130 penetrated by the electrode unit 110. For example, the seal molding 115 may seal the electrode assembly 150 and an electrolyte (not shown) contained in the case 180, and protect them from external harmful substances.

As an example, by inserting the electrode unit 110 in the opening 130' of the cap plate 130 and then injecting molding resin (not shown) between the opening 130' and the electrode unit 110, the seal molding 115 may be formed. For example, the seal molding 115 may be formed by insert injection molding. The cap plate 130 in which the electrode unit 110 is inserted is positioned in a mold (not shown) into which molding resin will be injected. Then, by insert injection molding for temporarily fixing the electrode unit 110 and the cap plate 130 in the mold and injecting molding resin into the mold, the seal molding 115 as shown in FIG. 5 may be formed. At this time, the injected molding resin may completely fill the gap between the cap plate 130 and the electrode unit 110 and may be airtightly interposed therebetween. In this way, the electrode assembly 150 and an electrolyte (not shown) contained in the case 180 may be sealed, and there are no problems, such as infiltration of external harmful substances into the case 180 or leakage of the internal electrolyte.

Referring to FIGS. 4 and 5, the seal molding 115 may include a joint groove portion 115c put in the opening 130' of the cap plate 130, an upper block 115a formed on the joint groove portion 115c, and a lower block 115b formed under the joint groove portion 115c. The joint groove portion 115c may constitute a neck portion that has the smallest width in the seal molding 115. On and under the joint groove portion 115c, the upper block 115a having a relatively large width and the lower block 115b are disposed so that the cap plate 130 may be firmly put in the joint groove portion 115c.

The seal molding 115 may be seamlessly formed as one body. For example, the joint groove portion 115c, the upper block 115a, and the lower block 115b of the seal molding 115 are seamlessly connected in one body, and the respective portions may be simultaneously formed together by insert injection molding.

Meanwhile, the upper block 115a may be interposed between the electrode terminal 111 and the cap plate 130 and may insulate the electrode terminal 111 from the cap plate 130.

The joining portion 113 between the electrode terminal 111 and the current collecting member 112 may be surrounded by at least the joint groove portion 115c and the lower block 115b. For example, the joining portion 113 may extend over the joint groove portion 115c and the lower block 115b, and the joint groove portion 115c and the lower block 115b may surround the joining portion 113 to protect the dissimilar metal interface from corrosion and improve a joining strength. In various embodiments of the present invention, the joining portion 113 may be formed over the joint groove portion 115c, the upper block 115a, and the lower block 115b, and the joint groove portion 115c, the upper block 115a, and the lower block 115b all may surround and protect the joining portion 113 of the electrode terminal 111 and the current collecting member 112 in cooperation.

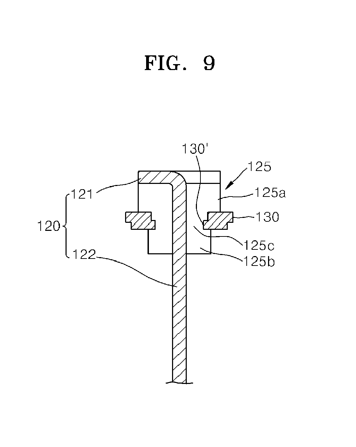

The second electrode unit 120 is described now. FIG. 9 shows a cross-sectional view taken along line IX-IX of FIG. 4. Referring to the drawing, the second electrode unit 120 includes the electrode terminal 121 (corresponding to the second electrode terminal) disposed on the cap plate 130 and a current collecting member 122 (corresponding to a second current collecting member) that electrically connects the electrode terminal 121 and the electrode assembly 150. For example, the electrode terminal 121 and the current collecting member 122 may be formed in one body as one member. In other words, the electrode terminal 121 and the current collecting member 122 may be seamlessly connected.

For example, when the second electrode unit 120 constitutes a positive electrode, the electrode terminal 121 and the current collecting member 122 may be formed of an aluminum material and formed as one member in one body.

The electrode unit 120 may be assembled to penetrate the opening 130' of the cap plate 130, and a seal molding 125 (corresponding to a second seal molding) may be interposed between the electrode unit 120 and the cap plate 130.

Referring to FIGS. 4 and 9 together, the seal molding 125 may include a joint groove portion 125c that is put in the cap plate 130, and an upper block 125a and a lower block 125b that are disposed on and under the joint groove portion 125c. The joint groove portion 125c may constitute a neck portion that has the smallest width in the seal molding 125. On and under the joint groove portion 125c, the upper block 125a having a relatively large width and the lower block 125b are disposed so that the joint groove portion 125c may be firmly put in the cap plate 130.

The seal molding 125 may be seamlessly formed as one body. For example, the joint groove portion 125c, the upper block 125a, and the lower block 125b of the seal molding 125 are seamlessly connected in one body, and the respective portions may be simultaneously formed together by insert injection molding.

Meanwhile, the upper block 125a may electrically insulate the electrode terminal 121 disposed on the cap plate 130 and the cap plate 130 from each other.

Referring to FIGS. 5 and 9 together, the seal moldings 115 and 125 (first and second seal moldings) of the first and second electrode units 110 and 120 may be formed in substantially the same shape. However, in an embodiment of the present invention, there may be a functional difference in that the seal molding 115 of the first electrode unit 110 functions to surround and protect the joining portion 113 between the electrode terminal 111 and the current collecting member 112 that are formed of different kinds of metals, whereas the seal molding 125 of the second electrode unit 120 covers a part of the electrode terminal 121 and the current collecting member 122 that are formed in one body.

Referring to FIG. 1, the whole bus bar 15 that electrically connects the battery cells 100 neighboring each other in the arrangement direction is formed of the first metal material. Here, the electrode terminals 111 and 121 of the respective battery cells 100 connected to the bus bar 15 are also formed of the first metal material. In this way, the electrode terminals 111 and 121 of the neighboring battery cells 100 and the bus bar 15 all are formed of the first metal material, that is, the same kind of materials, so that a connection structure of the bus bar 15 may be formed as a similar-metal junction. In a detailed embodiment, the neighboring electrode terminals 111 and 121 and the bus bar 15 may be formed of an aluminum material.

For example, a joint between the first electrode terminal 111 and the bus bar 15 and a joint between the second electrode terminal 121 and the bus bar 15 may be formed by welding between the same kind of metals. In a detailed embodiment, the joints between the first and second electrode terminals 111 and 121 and the bus bar 15 may be formed by aluminum welding. As will be described later, aluminum welding shows better weldability than copper welding, and thus is very advantageous in terms of production yield rate and weld strength.

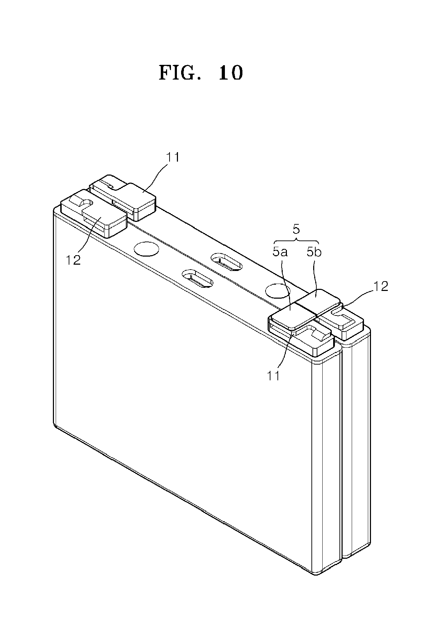

FIG. 10 shows a connection structure of a bus bar 5 according to a comparative example that is compared with the present invention. As shown in the drawing, the bus bar 5 that electrically connects neighboring battery cells is formed of a clad metal of different kinds of metals. For example, the bus bar 5 includes a first portion 5a formed of a first metal material of the same kind as that of a first electrode terminal 11, and a second portion 5b formed of a second metal material of the same kind as that of a second electrode terminal 12.

Here, the bus bar 5 and the first electrode terminal 11 constitute a similar-metal junction of the first metal material, and the bus bar 5 and the second electrode terminal 12 constitute a similar-metal junction of the second metal material. For example, similar-metal welding of copper may be performed between the bus bar 5 and the first electrode terminal 11, and similar-metal welding of aluminum may be performed between the bus bar 5 and the second electrode terminal 12. However, copper-copper weld strength is remarkably lower than aluminum-aluminum weld strength. In other words, the connection structure of the bus bar 5 according to the comparative example involves copper-copper welding, but the low weldability due to material characteristics involves a special welding technology and makes it difficult to ensure sufficient weld strength.

In an embodiment of the present invention, the first and second electrode terminals 111 and 121 and the bus bar 15 all are formed of an aluminum material so that the problem of copper-copper weldability and special welding may be avoided, and aluminum-aluminum welding which shows better weldability may be used.

Meanwhile, as shown in FIG. 1, the bus bar 15 electrically connects the neighboring battery cells 100. By connecting the electrode terminals 111 and 121 having opposite polarities with the bus bar 15, the neighboring battery cells 100 may be connected in series. However, the present invention is not limited to this case. For example, by connecting the electrode terminals 111 and 121 having the same polarity with the bus bar 15, the neighboring battery cells 100 may be connected in parallel.

As described above, according to the one or more of the above embodiments of the present invention, the corrosion resistance and joining strength of a terminal unit including a joining portion between different kinds of metals are improved.

According to other embodiments of the present invention, a secondary battery is provided in which a bus bar electrically connecting neighboring battery cells has an improved connection structure, and thus the problem of deterioration of weldability due to material characteristics may be fundamentally solved.

## Claims

1. A secondary battery (10) comprising
at least one battery cell (100) with an electrode assembly (150), a case (180) accommodating the electrode assembly (150), and a cap plate (130) affixed to the case (180), the cap plate (130) comprising an opening (130'), wherein
the battery (10) further comprises an electrode unit (110), which extends through the opening (130') and which comprises a current collecting member (112) that electrically contacts an electrode of the electrode assembly (150), and an electrode terminal (111) that is arranged at an outer side of the cap plate (130), and wherein
the current collecting member (112) and the electrode terminal (111) are formed of different materials and are interconnected by a joining portion (113) of the electrode unit (110),
**characterized in that**
the battery (10) comprises a seal molding (115) in which the joining portion (113) is embedded.

2. The battery (10) of claim 1, **characterized in that** the seal molding (115) completely surrounds the joining portion (113).

3. The battery (10) of claim 1 or 2, **characterized in that** the seal molding (115) insulates the electrode unit (110) from the cap plate (130).

4. The battery (10) of any of claims 1 to 3, **characterized in that** the seal molding (115) seals the opening (130').

5. The battery (10) of any of claims 1 to 4, **characterized in that** the seal molding (115) extends from an inside of the case (180) through the opening (115') to an outer side of the case (180).

6. The battery (10) of any of claims 1 to 5, **characterized in that** the seal molding (115) is formed with a groove portion (115c) and block portions (115a, 115b), wherein the groove portion (115c) is arranged between the block portions (115a, 115b), and wherein the cap plate (130) engages the groove portion (115c).

7. The battery (10) of claim 6, **characterized in that** the current collecting member (112) extends from the electrode terminal (111) in a longitudinal direction and the groove portion (115c) completely circulates the joining portion (113) in a circumferential direction of the current collecting member (112).

8. The battery (10) of any of claims 1 to 7, **characterized in that** the joining portion (113) is formed by sheet metal joining, riveting, caulking, welding and/or punching the current collecting member (112) and the electrode terminal (111).

9. The battery (10) of any of claims 1 to 8, **characterized in that** the battery (10) comprises a second electrode unit (120) that extends through a second opening of the cap plate (130) and that comprises a current collecting member (122) and an electrode terminal (121), wherein the current collecting member (122) and the electrode terminal (121) are integrally formed with each other.

10. The battery (10) of claim 9, **characterized in that** the battery (10) comprises a second seal molding (125) that completely surrounds the current collecting member (122) in its circumferential direction.

11. The battery (10) of claim 10, **characterized in that** the second seal molding (125) seals the second opening.

12. The battery (10) of claim 10 or 11, **characterized in that** the second seal molding (125) is formed with a groove portion (125c) and block portions (125a, 125b), wherein the groove portion (125c) is arranged between the block portions (125a, 125b), and wherein the cap plate (130) engages the groove portion (125c).

13. The battery (10) of claim 12, **characterized in that** the current collecting member (122) extends from the electrode terminal (121) in a longitudinal direction and the groove portion (125c) completely circulates the current collecting member (122) in its circumferential direction.

14. The battery (10) of any of claims 9 to 13, **characterized in that** the electrode terminal (111) of the electrode unit (110) and the second electrode unit (120) are formed of the same material.

15. The battery (10) of any of claims 1 to 14, **characterized in that** the battery (10) comprises two battery cells (100) that are electrically interconnected by a bus bar (15), wherein the electrode terminals (111) of the electrode units (110) of the battery cells (100) and the bus bar (15) are made of the same material.
